Europäisches Patentamt

European Patent Office

Office européen des brevets

(11) Veröffentlichungsnummer: **0 117 866**
**A2**

## (12) EUROPÄISCHE PATENTANMELDUNG

(21) Anmeldenummer: 84890033.8

(22) Anmeldetag: 24.02.84

(51) Int. Cl.³: **A 45 C 5/14,** A 45 C 5/00

(30) Priorität: **28.02.83 US 470620**

(43) Veröffentlichungstag der Anmeldung: **05.09.84**
**Patentblatt 84/36**

(84) Benannte Vertragsstaaten: **BE DE FR IT**

(71) Anmelder: **Cowdery, Timothy Kevin, 13647 Oakwood**
**Curve, Burnsville Minnesota (US)**

(72) Erfinder: **Cowdery, Timothy Kevin, 13647 Oakwood**
**Curve, Burnsville Minnesota (US)**

(74) Vertreter: **Weinzinger, Arnulf, Dipl.-Ing. et al,**
**Patentanwälte Dipl.-Ing. Helmut Sonn Dr. Heinrich**
**Pawloy Dipl.-Ing. Arnulf Weinzinger Riemergasse 14,**
**A-1010 Wien (AT)**

(54) **Gepäckstück.**

(57) Es wird ein Gepäckstück (10) vorgeschlagen, das einen Unterteil (11) und einen damit schwenkbar verbundenen Oberteil (12) aufweist sowie einen einziehbaren Handgriff (14), einen einziehbaren Stützfuss (16) und einziehbare Räder (15) besitzt, wobei diese Teile miteinander gekuppelt sind, um beim Ein- oder Ausschwenken des Handgriffes (14) ein Ein- oder Ausbewegen der Räder (15) und des Stützfusses (16) herbeizuführen. Oberteil (12) und Unterteil (11) weisen je zumindest ein gesondertes Abteil auf, wobei insbesondere ein Abteil von aussen zugänglich sein soll, ohne dass das Gepäckstück geöffnet werden muss. Im Inneren des Gepäckstückes (10) ist ferner eine Kleiderstange zum Darüberhängen von Kleidungsstücken und dergl. vorgesehen.

ACTORUM AG

GEPÄCKSTÜCK

Die Erfindung betrifft ein Gepäckstück mit einem Unterteil und einem daran angelenkten, relativ dazu zwecks öffnen bzw. Schließen des Gepäckstückes verschwenkbarenOberteil, welche Teile zusammen in der Schließlage eine obere Wand, eine Bodenwand, eine Vorderwand, eine Rückwand und zwei Seitenwände definieren, wobei die Schwenkachse des Oberteiles, die unterhalb der oberen Wand vorgesehen ist, und die im Bereich der Vorderwand vorgesehene Teilungslinie zwischen den beiden Teilen parallel zur Rückwand bzw. Bodenwand verlaufen.

Koffer oder Gepäckstücke sind in den verschiedensten Größen und Formen bekannt, und sie werden in erster Linie zum Transport von Kleidungsstücken und anderen persönlichen Gegenständen auf Reisen verwendet. Kleinere Koffer können leicht getragen und gehandhabt werden, ohne daß Hilfe von anderen, etwa von Trägern auf Flughäfen oder von Hotelboys in Hotels, notwendig ist. Wegen ihrer beschränkten Größe ist jedoch der für das Packgut zur Verfügung stehende Platz ziemlich begrenzt. Im übrigen besitzen diese kleineren Koffer eine übliche Konstruktion mit einem unteren Behälterteil, in denen die Kleidungsstücke und andere persönliche Gegenstände eingepackt werden, und einem Deckel, der einfach über den Gegenständen geschlossen wird, wenn der Packvorgang beendet ist. Demzufolge muß, wenn ein bestimmter Gegenstand im Koffer gesucht wird, zumeist der gesamte Kofferinhalt durchwühlt werden, bis der gewünschte Gegenstand gefunden ist.

Größere Koffer bzw. Gepäckstücke sind, insbesondere in vollgepacktem Zustand, außerordentlich schwer, so daß zumeist die Hilfe von Trägerpersonal oder ein Gepäckwagen oder dergl.benötigt wird, um diese größeren Koffer von einem Ort zu einem anderen zu bringen. Bei einigen dieser größeren Gepäckstücke wurde bereits vorgeschlagen, einziehbare Räder vorzusehen. Beispielsweise zeigen die US-Patentschriften
2 510 754, 3 141 680 und 4 314 624 Gepäckstücke mit
einziehbarem Handgriff und einziehbaren Rädern. Wenngleich
diese bekannten Gepäckstücke im allgemeinen für manche
Anwendungsbereiche durchaus zufriedenstellend waren, sind
die dabei verwendeten Mechanismen doch eher kompliziert, und
es fehlt die Stabilität und Robustheit, die bei einem großen
Gepäckstück erwünscht ist. Darüberhinaus sind auch diese
größeren Gepäckstücke von herkömmlicher Koffergestalt,
nämlich mit einem Unterteil und einem angelenkten Deckel.
Bei diesen herkömmlichen Koffern werden Kleidungsstücke und
andere persönliche Gegenstände zuerst in den Unterteil
gelegt bzw. eingepackt, wonach der Deckel geschlossen wird.
Dadurch ist der Zugang zu einem bestimmten Gegenstand
innerhalb des Koffers in manchen Fällen praktisch unmöglich,
ohne daß der gesamte Kofferinhalt ausgepackt wird. Auch ist
bei diesen bekannten Koffern ein Zutritt zum Kofferinhalt
nur durch öffnen des gesamten Koffers in der üblichen Weise
möglich.

Es besteht daher nach wie vor ein Bedarf an einem
Gepäckstück, das zufolge seiner Ausbildung vorteilhaft beim
Packen ist und auch in günstiger Weise einen Zutritt zu im
Gepäckstück verpackten Gütern ermöglicht, und das
insbesondere auch einen einfachen Mechanismus mit
einziehbarem Handgriff und einziehbaren Rädern aufweist.

Demgemäß ist es Aufgabe der Erfindung, ein
Gepäckstück der eingangs angegebenn Art zu schaffen, bei dem
ein bequemer, rascher Zugriff zu irgendeinem Kleidungsstück
oder anderen Gegenstand möglich ist, der im Gepäckstück
verpackt ist, und bei dem ein bequemes, rasches Einpacken
sowie ein großer Verpackungsraum, der wirksam genutzt werden
kann, gewährleistet sind. Das Gepäckstück soll dabei weiters
robust sein und vorzugsweise, im Rahmen einer möglichst
einfachen Konstruktion,das Vorsehen eines einziehbaren
Handgriffes und von einziehbaren Rädern ermöglichen, wobei beim Abstellen des Gepäckstückes eine hohe Stabilität gewährleistet sein soll.

Diese Aufgabe wird erfindungsgemäß beim Gepäckstück der eingangs angegebenen Art dadurch gelöst, daß die Teilungslinien zwischen den beiden Teilen im Bereich der beiden Seitenwände derart verlaufen, daß ihre Anschlußstellen an der Vorderwand tiefer liegen als jene an der Rückwand, und daß die beiden Teile je zumindest ein gesondertes Aufbewahrungsabteil enthalten.

Beim erfindungsgemäßen Gepäckstück, das insbesondere eine kasten- oder kistenförmige Konfiguration aufweist, liegt somit nicht die herkömmliche Ausbildung mit einem einfachen Unterteil und einem Deckel als Oberteil vor, wobei nur in den Unterteil das Verpackungsgut eingepackt werden kann, vielmehr können in der Offenstellung unabhängig voneinander sowohl im Unterteil als auch im Oberteil des Gepäckstückes Gegenstände verpackt werden, wonach der Oberteil relativ zum Unterteil in die Schließlage verschwenkt wird. Durch die besondere Teilung beim erfindungsgemäßen Gepäckstück können dabei z.B. fünf oder mehr gesonderte Abteile oder Fächer zum Einpacken von Kleidungsstücken oder anderen persönlichen Gegenständen vorgesehen werden, welche je für sich zugänglich sind und so einen bequemen, raschen Zutritt zu einem bestimmten Gegenstand oder Kleidungsstück ermöglichen.

Eine vorteilhafte Ausführungsform des erfindungsgemäßen Gepäckstückes ist dabei dadurch gekennzeichnet, daß die Teilungslinien im Bereich der Seitenwände je einen rechtwinkelig zur Vorderwand und einen rechtwinkelig zur Rückwand verlaufenden Abschnitt sowie einen diese Abschnitte verbindenden Verbindungsabschnitt aufweisen. Durch den so erhaltenen, im wesentlichen Z-förmigen Verlauf der Teilungslinien im Bereich der Seitenwände wird das Vorsehen von mehreren gesonderten, insbesondere auch in etwa gleich großen Abteilen in den beiden Teilen des Gepäckstückes begünstigt.

Von Vorteil ist es dabei weiters, wenn jeder der an die Rückwand anschließenden Abschnitte sich in Richtung zur Vorderwand hin bis über die vertikale Mittellinie der Seitenwand hinaus erstreckt. In entsprechender Weise ist es weiters günstig, wenn jeder der an die Vorderwand anschließenden Abschnitte der Teilungslinien im Bereich der Seitenwände sich in Richtung zur Rückwand hin bis über die vertikale Mittellinie der Seitenwand hinaus erstreckt.

Bei einer derartigen Ausbildung werden im Unterteil bzw. Oberteil Abteile oder Fächer ermölicht, die sich von einer breiteren Zutrittsöffnung weg zu einem Abteil-Boden hin verengen, was für das Einpacken von Gütern vorteilhaft ist.

Eine zweckmäßige Weiterbildung des erfindungsgemäßen Gepäckstückes ist ferner gekennzeichnet durch eine Kleiderstange, die sich zwischen den Seitenwandteilen des Unterteiles an einer Stelle ungefähr auf der vertikalen Mittellinie der jeweiligen Seitenwand erstreckt. Diese sich somit quer durch das Gepäckstück erstreckende Kleiderstange kann nicht nur in vorteilhafter Weise dazu verwendet werden, Kleidungsstücke, wie Hosen, Sakkos oder dgl. Gegenstände, darüber zu hängen, sie bietet überdies auch den Vorteil einer zusätzliche Versteifung der Konstruktion des Gepäckstückes.

Zur Erzielung eines möglichst großen, günstig zu nutzenden Verpackungsraumes ist es auch von Vorteil, wenn wenigstens ein Abteil in jenem Bereich der Oberteiles geformt ist, der sich in der Schließlage des Oberteiles oberhalb der Schwenkachse befindet. Um einen besonders raschen Zutritt zu diesem Abteil zu ermöglichen, ist es dabei weiters vorteilhaft, wenn das im Bereich des Oberteiles oberhalb der Schwenkachse geformte Abteil über eine Tür mit zugehörigem Verschlußmechanismus in einer Außenwand des Gepäckstückes zugänglich ist.

Weiters ist es zum Verpacken von Gegenständen auch günstig, wenn wenigstens ein Abteil in jenem Bereich des Oberteiles geformt ist, der sich bei geöffnetem Oberteil in einer Position tiefer als die Schwenkachse befindet. Ferner ist aus diesem Grund vorteilhafterweise wenigstens ein Abteil im Unterteil geformt.

In der vorstehend zuletzt erwähnten Ausführungsformen ist es daher besonders günstig für die Nutzung des Packraumes des Gepäckstückes, wenn wenigstens ein Abteil im Oberteil in dessen in der Schließstellung oberhalb der Schwenkachse befindlichem Bereich, wenigstens ein Abteil im Oberteil in dessen in der Offenstellung tiefer als die Schwenkachse gelegenen Bereich und wenigstens ein Abteil im Unterteil vorgesehen ist.

Vorzugsweise ist das bzw. jedes Abteil mit einer anscharnierten Tür mit zugehörigem Verschlußmechanismus versehen, um den Zutritt zum Abteil bzw. den darin verpackten Gegenständen auf bequeme, rasche Weise zu ermöglichen.

Um das Hantieren mit dem vorliegenden Gepäckstück so bequem wie möglich zu gestalten, ist es weiters günstig, wenn zumindest an jeder Kante außer an den Kanten an der Unterseite ein Griff vorgesehen ist. Dadurch kann das Gepäckstück jeweils unabhängig von seiner Lage ergriffen werden, wenn es von einer Stelle an eine andere bewegt werden soll.

Wie somit ersichtlich, ist es beim erfindungsgemäßen Gepäckstück möglich, einen Zugang zu mindestens einem der innen eingerichteten Abteile oder Fächer zu bieten, ohne daß der ganze Koffer geöffnet werden muß. Auch kann eine derartige vorteilhafte Ausbildung vorgesehen werden, daß eine Kleiderstange ungefähr in der Mitte des Gepäckstückes vorliegt, so daß Kleidungsstücke auf diese gehängt werden können, während das Gepäckstück in seiner normalen, aufrechten Stellung ist. Schließlich ist auch eine solche Konstruktion ermöglicht, bei der jedes der verschiedenen Abteile oder Fächer im Inneren bequem zugänglich ist, wenn das Gepäckstück geöffnet ist.

Wie weiters zu ersehen ist, ist beim erfindungsgemäßen Gepäckstück insbesondere eine kompakte, verhältnismäßig große, kastenförmige Ausbildung mit Vorteil möglich, und es ist daher gemäß einem weiteren Aspekt der vorliegeden Erfindung zweckmäßig, dieses Gepäckstück mit zusätzlichen Einrichtungen auszustatten, die ein Hantieren mit dem Gepäckstück erleichtern.

Eine besonders vorteilhafte Weiterbildung des erfindungsgemäßen Gepäckstückes ist demgemäß gekennzeichnet durch einen an einer der Wände schwenkbar angebrachten länglichen Handgriff, der zwischen einer eingezogenen Ruhestellung und einer ausgefahrenen Arbeitsstellung bewegbar ist und nahe einem Ende einen Griffteil sowie an seinem anderen Ende, auf der Seite der Schwenkachse des Handgriffes gegenüber dem Griffteil, ein Bewegungsübertragungs-Verbindungsglied aufweist, und durch eine zwei Räder tragende, parallel zur Schwenkachse des Handgriffes verlaufende, längliche Radachse, die mit den Rädern zwischen einer eingezogenen Ruhestellung und einer ausgefahrenen Arbeitsstellung bewegbar ist, wobei im Bereich der beide Enden der Radachse jeweils eine Führung für deren Bewegung vorgesehen ist und sich eine Stange zwischen dem Verbindungsglied und der Radachse erstreckt, um die Radachse und Räder bei Bewegen des Handgriffes in die Ruhestellung oder Arbeitsstellung entsprechend in die Ruhestellung bzw. Arbeitsstellung zu bewegen. Bei dieser Ausbildung ermöglicht der ausschwenkbare Handgriff, der problemlos einen angemessen langen Hebelarm vorsehen kann, ein bequemes Hantieren mit dem Gepäckstück, ohne daß große Anstrengungen hiezu notwendig sind. Automatisch mit dem Ausschwenken des Handgriffes werden auch die Räder ausgefahren, so daß das Gepäckstück bequem von einem Platz zu einem anderen verfahren werden kann.

Zur Erzielung einer kompakten Konfiguration des Gepäckstückes in der Ruhelage, wenn gerade keine Manipulationen gewünscht sind, ist vorteilhafterweise eine Ausnehmung zur Aufnahme des Handgriffes in der Ruhestellung vorgesehen. Diese Ausnehmung ist insbesondere in der Rückwand des Gepäckstückes angeordnet.

Um das Einfahren der Räder - bei Einschwenken des Handgriffes in die Ruhestellung - zu erleichtern, ist zweckmäßigerweise weiters eine Federeinrichung vorgesehen, die die Radachse in die Ruhestllung vorspannt.

Um das erfindungsgemäße Gepäckstück bei ausgefahrenen Rädern bequem und stabil abstellen zu können, ist es weiters auch günstig, wenn ein zwischen einer eingezogenen und einer ausgefahrenen Position bewegbarer Stützfuß schwenkbar am Boden des Gepäckstückes angebracht ist.

Um dabei die Handhabung zusätzlich zu vereinfachen, ist es auch günstig, wenn dem Stützfuß eine Betätigungsstange zugeordnet ist, die mit einem Ende mit dem Stützfuß verbunden ist und deren anderes Ende in einer Position für einen Eingriff mit der Radachse vorliegt. Weiters ist hier eine vorteilhafte Ausbildung gekennzeichnet durch eine Einrichtung zur Übertragung der Bewegung der Radachse auf die Betätigungsstange, um den Stützfuß bei Ausfahren bzw. Einziehen der Radachse entsprechend auszufahren bzw. einzuziehen.

Die vorstehend erwähnten Führungen sind vorzugsweise einfach durch im Bereich der gegenüberliegende Enden der Radachse angeordnete Führungsschlitze gebildet. Dabei ist es für eine kompakte Umrißgestalt des vorliegenden Gepäckstückes einerseits bzw. für dessen Verfahren andererseits besonders günstig, wenn die Führungsschlitze derart geformt sind, daß die Räder zwischen einer eingezogenen Stellung, in der sie vollständig innerhalb des Umrisses des Gepäckstückes liegen, und einer ausgefahrenen Stellung, in der sie teilweise an der Unterseite und Rückseite des Gepäckstückes vorstehen, bewegbar sind.

Weitere Vorteile und Merkmale der Erfindung ergeben sich aus der nachfolgenden Beschreibung eines bevorzugten Ausführungsbeispieles unter Bezugnahme auf die Zeichnung, in
der

Fig. 1 eine Schrägansicht des erfindungsgemäßen
Gepäckstückes zeigt, wobei das Gepäckstück geschlossen ist,
und wobei der Handgriff und die Räder in der ausgefahrenen
Arbeitsstellung veranschaulicht sind;

Fig. 2 eine Schrägansicht dieses Gepäckstückes, nun
jedoch in geöffneter Lage, ist, wobei der Handgriff und die
Räder in der eingefahrenen bzw. eingeschwenkten Ruhelage
vorliegen, und wobei veranschaulicht ist, wie ein Zugang zu
den verschiedenen Abteilen innerhalb des Gepäckstückes
möglich ist;

Fig. 3 eine Rückansicht des erfindungsgemäßen
Gepäckstückes zeigt, wobei der Handgriff und die Räder in
der ausgefahrenen Arbeitsstellung veranschaulicht sind;

Fig. 4 eine Seitenanscht, teilweise im Schnitt, des
Gepäckstückes ist, wobei der Handgriff, die Räder und der
Stützfuß in der eingezogenen Ruhestellung gezeigt sind;

Fig. 5 eine Seitenansicht, teilweise im Schnitt,
ähnlich Fig. 4 ist, wobei hier jedoch der Handgriff, die
Räder und der Stützfuß in der ausgefahrenen bzw.
ausgeschwenkten Arbeitslage veranschaulicht sind;

Fig. 6 eine Teilansicht zur Veranschaulichung der
Verbindung zwischen der dem schwenkbaren Handgriff
zugeordneten Kraftübertragungsstange und der Radachse ist;
und

Fig. 7 eine Detail-Schrägansicht zur
Veranschaulichung des Mechanismus zum Einfahren und
Ausschwenken des Stützfußes in Verbindung mit der Bewegung
der Räder zeigt.

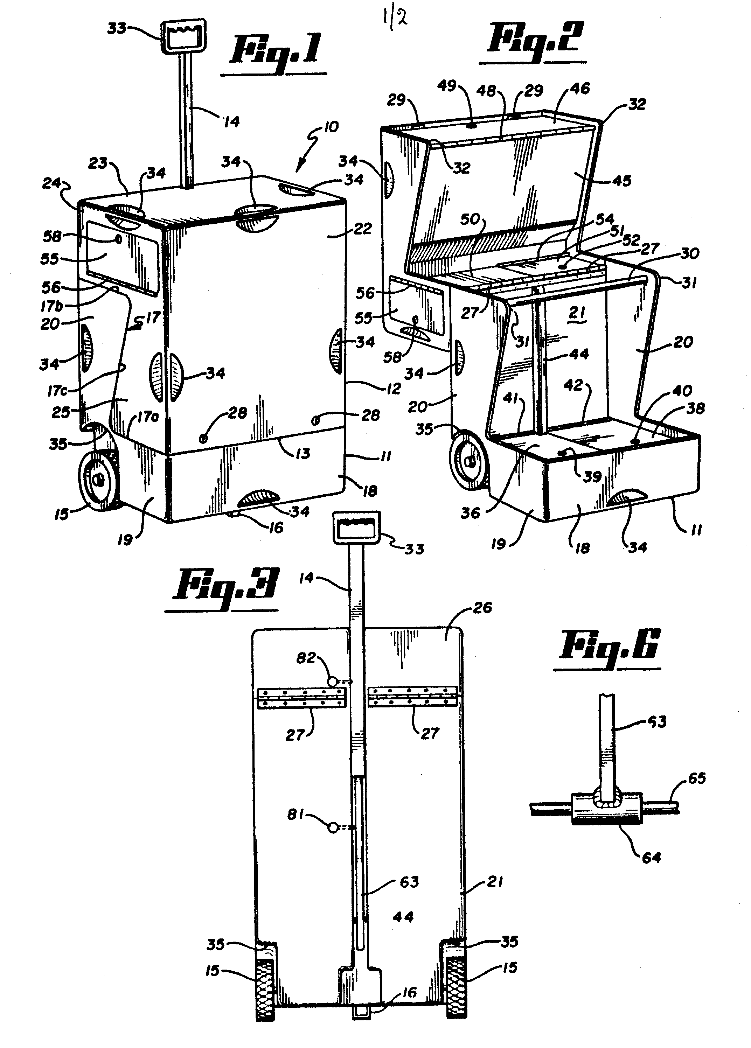

Gemäß den Fig. 1 bis 3 weist das in der Zeichnung
gezeigte Gepäckstück 10 einen Unter- oder Basisteil 11,
einen damit schwenkbar verbundenen Ober- oder Deckelteil 12,
einen einziehbaren Handgriff 14, zwei einfahrbare Räder 15
und einen einziehbaren Stützfuß 16 auf. Wie aus Fig. 1
ersichtlich ist, hat das Gepäckstück 10 eine im allgemeinen rechtwinkelige, quaderförmige Gestalt, wenn der Oberteil 12
geschlossen ist, wobei aber an sich andere Ausbildungen und
Formen im Prinzip ebenfalls möglich wären. Weiters liegt bei
der vorliegenden Ausführung die größte Ausdehnung in der
vertikalen Richtung vor, so daß das Gepäckstück auf seiner
unteren "Stirnseite" anstatt auf seiner Rückseite ruht, wie
dies bei herkömmlichen Koffern der Fall ist, wenn ein Öffnen
oder Schließen erfolgen soll.

Der Unterteil 11 weist eine Vorderwand 18, zwei
Seitenwände, von denen jede einen unteren Seitenwandteil 19
und einen oberen Seitenwandteil 20 enthält, eine Rückwand 21
und eine (in der Zeichnung nicht näher ersichtliche bzw.
bezeichnete) Bodenwand auf. Wie gezeigt sind die Vorderwand
18 und die unteren Seitewandteile 19 im Vergleich zur
Gesamthöhe des Gepäckstückes 10 relativ kurz. Die oberen
Seitenwandteile 20 setzen sich von den unteren
Seitenwandteilen 19 nach oben fort, wobei sie sich nach oben
zu verbreitern, so daß eine gegen die Vorderseite des
Gepäckstückes 10 zu vorspringende Ecke 31 (Fig. 2) erhalten
wird, welche vor der Mitte des Gepäckstückes angeordnet ist.
Die Rückwand 21 ist am besten aus Fig. 3 ersichtlich.

Der Oberteil 12 des Gepäckstückes 10 weist einen
Vorderwandteil 22, zwei Seitenwände, die je aus einem in der
Schließstellung (Fig. 1) oberen Seitenwandteil 24 und
unteren Seitenwandteil 25 bestehen, eine Deckwand 23 sowie
eine Rückwand 26 auf. Wenn das Gepäckstück 10 geschlossen
ist, wie in Fig. 1 gezeigt ist, bildet der Vorderwandteil 22
des Gepäckstück-Oberteiles 12 einen Teil der Vorderfläche
oder -wand des Gepäckstückes, wobei die Unterkante des
Vorderwandteiles 22 in Eingriff mit der Oberkante der
Vorderwand 18 des Gepäckstück-Unterteiles 11 steht. Die
paarweisen Seitenwandteile 24, 25, die zusammen die
Seitenwände des Oberteiles 12 bilden, weisen je eine
Winkelkante auf, die genau zur entsprechenden Winkelkante,
mit der Ecke 31, der Seitenwandteile 19, 20 der Seitenwände
des Unterteiles 11 paßt. Es sei hier erwähnt, daß die zusammengehörigen Kanten der verschiedenen Wände, z.B. der
Vorderwände 18 und 22 und der Seitenwandteile 19, 20 bzw.
24, 25, vom Oberteil und Unterteil einander in der
Schließlage überlappen, wie dies an sich üblich ist. Die
obere oder Deckwand 23 des Oberteiles 12 verbindet die
Vorderwand 22 und die oberen Seitenwandteile 24 der beide
Seitenwände sowie die Rückwand 26 miteinander. Wie
insbesondere aus Fig. 2 und 3 ersichtlich ist, ist die
Rückwand 26 an ihrer unteren Kante mittels zweier
herkömmlicher Streifenscharniere 27 an der oberen Kante der
Rückwand 21 des Unterteiles 11 angelenkt. Beim dargestellten
Ausführungsbeispiel weist jeder der unteren Seitenwandteile
25 der Seitenwände des Oberteiles 12 einen Eckbereich 32
(Fig. 2) auf, der sich in der Schließlage (Fig. 1) nach
hinten bis über die Mitte des Gepäckstückes hinaus
erstreckt. Auf diese Weise wird ein im allgemeinen
Z-förmiger Verlauf der Teilungs- oder Saumlinie 17 zwischen
Ober- und Unterteil im Bereich der Seitenwände des
Gepäckstückes 10 erhalten, vgl. insbesondere die Fig. 1, 4
und 5, wobei Oberteil und Unterteil entlang dieser
Teilungslinie oder dieses Saumes geöffnet werden bzw.
aneinander anschließen.

Zu erwähnen ist weiters noch, daß die
Scharnierachse, also die Schwenkachse, um die der Oberteil
12 relativ zum Unterteil 11 verschwenkbar ist, im
wesentlichen parallel sowohl zur Rückwand als auch zur
Bodenwand des Gepäckstückes verläuft.

In der geschlossenen Stellung gemäß Fig. 1 weist
demgemäß das vorliegende Gepäckstück 10 eine Konfiguration
mit einer Deckwand 23, einer Bodenwand, einer durch die
Vorderwandteile 18 und 22 gebildeten Vorderwand, einer durch
die Rückenwandteile 21 und 26 gebildeten Rückwand und zwei
jeweils durch Seitenwandteile 19, 20, 24 und 25 gebildete
Seitenwände auf. Wie gezeigt, liegen die Scharniere 27 in
einem Abstand unterhalb der Deckwand 23 vor (Fig. 3). Dies
schafft in vorteilhafter Weise Platz für gesonderte Abteile im oberen Abschnitt, wie nachstehend noch näher beschrieben werden wird. Im Bereich der Vorderwand schließen Oberteil 12 und Unterteil 11 in der Schließlage längs einer Teilungslinie oder Saumlinie 13 aneinander an, die im wesentlichen parallel zur Scharnierachse verläuft. Wie bereits erwähnt, haben die Teilungslinien 17 im Bereich der Seitenwände einen ungefähr Z-förmigen Verlauf, wobei in der bevorzugten Ausführungsform Abschnitte 17a bzw. 17b vorliegen (Fig. 1), die sich im wesentlichen im rechten Winkel zur Vorderwand bzw. Rückwand des Gepäckstückes erstrecken, wobei sich ein dritter Abschnitt, ein Verbindungsabschnitt 17c, zwischen diesen beiden Abschnitten 17a und 17b erstreckt und diese miteinander verbindet.

Wie sowohl aus Fig. 1 als auch aus Fig. 2 ersichtlich ist, weist sowohl der Unterteil 11 als auch der Oberteil 12 des Gepäckstückes 10 mehrere Handgriffe 34 auf, die an verschiedenen Stellen längs des Umfanges des Gepäckstückes angebracht sind, um das Manipulieren und Bewegen des Gepäckstückes zu erleichtern. Diese Griffe 34 können direkt im Gepäckstück selbst eingeformt sein, oder sie können durch Lederstreifen gebildet sein, die mit dem Äußeren des Gepäckstückes verbunden sind, oder aber es können andere an sich bekannte Griffausbildungen vorgesehen werden. Beim in Fig. 1 und 2 gezeigten bevorzugten Ausführungsbeispiel wird der Oberteil 12 mit dem Unterteil 11 durch zwei Standard-Zylinderschlösser 28 (Fig. 1) verriegelt. Jedes dieser Zylinderschlösser 28 enthält einen Schnapp -oder Riegelmechanismus 29 (Fig. 2) an der inneren Unterkante der Vorderwand 22 des Oberteiles 12, der mit eine entsprechenden (nicht ersichtlichen) Schließmechanismus innerhalb der Oberkante der Vorderwand 18 des Unterteiles 11 in herkömmlicher Weise zusammenwirkt.

Gemäß Fig. 2 enthält der Unterteil 11 zwei Abteile oder Fächer zum Einpacken von Kleidungsstücken oder anderen persönlichen Gegenständen. Diese Abteile besitzen Deckel 36, 38, welche an der Rückwand 21 mit Hilfe von zwei üblichen Scharnieren 41, 42 angelenkt sind. Den Deckeln 36, 38 sind herkömmliche Federschnappschlösser 39 bzw. 40 zugeordnet, um die Deckel, falls erwünscht, in der Schließstellung zu sichern. An der Innenseite der Rückwand 21 des Unterteiles 11 ist ein Hohlrippenteil 44 vorgesehen, der auf der Außenseite als nischenförmige Ausnehmung den einschwenkbaren Handgriff 14 aufnimmt. Der Unterteil 11 ist weiters mit einer Nische 35 an jeder seiner unteren hinteren Ecken versehen, um das Einziehen der Räder 15 in ihre Ruhelage zu ermöglichen, und auch um ein Vorstehen der Räder über die Seitenwände des Gepäckstückes zu verhindern. Zwischen den vorne oben liegenden Bereichen der Seitenwandteile 20 ist eine Kleiderstange 30 angeordnet. Wie in Fig. 2 gezeigt ist, ist diese Kleiderstange 30 ungefähr in der Mitte zwischen der Vorderseite und der Rückseite des Gepäckstückes vorgesehen. Dies ergibt eine hohe Stabilität, wenn das Gepäckstück vollgepackt wird. Auch erhöht die Kleiderstange 30 zusätzlich die Steifheit der Struktur des Gepäckstückes selbst. Im bevorzugten Ausführungsbeispiel ist die Kleiderstange 30 an ihren gegenüberliegende Enden fest an den Innenseiten der oberen vorderen Abschnitte der Seitenwandteile 20 befestigt.

Wie in Fig. 2 gezeigt ist, ist der Oberteil 12 des Gepäckstückes an der Oberkante der Rückwand 21 des Unterteiles 11 mit Hilfe der erwähnten Streifenscharniere 27 anscharniert, und in der Offenstellung des Oberteiles 12 liegen drei zusätzliche Abteile zum Einpacken von Kleidungsstücken und anderen persönlichen Gegenständen frei. Ein Abteil 45 ist zwischen den Seitenwandteilen 25 angeordnet und mit einem Deckel 46 versehen, der mit einer Vorderwand des Abteiles 45 durch ein Scharnier 48 verbunden ist. Der Deckel 46 weist einen herkömmlichen Federschnappverschluß 49 auf, um den Deckel 46 in der verriegelten Position falls gewünscht zu sichern. Ein zweites Abteil oder Fach ist benachbart einem der Seitenwandteile 24 geformt und mit einem Deckel 51 versehen, der mittels eines Scharnieres 54 schwenkbar an einen Innenabschnitt der Vorderwand 22 angeschlossen ist. Dem Deckel 51 ist wiederum ein herkömmlicher Federschnappverschluß 52 zugeordnet, um ihn gewünschtenfalls in der Schließstellung zu sichern. Ein drittes Abteil 50 im Oberteil 12 ist anstatt vom Inneren des Gepäckstückes von dessen Außenseite her über einen Deckel 55 zugänglich, der am Seitenwandteil 24 durch ein Scharnier 56 schwenkbar befestigt ist. Diesem Deckel 55 ist ein herkömmliches Zylinderschloß 58 mit Schlüssel, ähnlich den Zylinderschlössern 28 (Fig. 1), zugeordnet, um das Abteil 50 verschließen zu können.

Der Mechanismus zum Ausfahren und Einziehen des Handgriffes 14, der Räder 15 und des Stützfußes 16 ist am besten aus den Fig. 4 und 5 ersichtlich. Fig. 4 zeigt den Handgriff 14, die Räder 15 und den Stützfuß 16 in der eingezogenen Ruhestellung, wogegen Fig. 5 diese Elemente in der ausgefahrenen Arbeitsstellung veranschaulicht. Wie ersichtlich, ist der einschwenkbare Handgriff 14 an einem Ende mit einemSteuerelement oder Bewegungsübertragungs-Verbindungsglied 59 verbunden, welches am Körper des Gepäckstückes 10 in einem Schwenkpunkt 60 schwenkbar befestigt ist. Das andere Ende des Handgriffes 14 weist einen Griffteil 33 auf. Ein Ende des Verbindungsgliedes 59 ist fest mit dem Handgriff 14 verbunden, während das andere Ende einen abstehenden Ansatzteil 61 enthält, der über ein Gelenk 62 mit einer Radantriebsstange 63 schwenkbar verbunden ist. Das andere Ende dieser Stange 63 ist nahe dem Mittelpunkt einer Radachse 65 an diese angeschlossen. Die Verbindung zwischen dem unteren Ende der Betätigungs- oder Antriebsstange 63 und der Radachse 65 ist insbesondere in Fig. 6 gezeigt, in der veranschaulicht ist, wie das untere Ende der Stange 63 an einer kurzen Rohrbüchse 64 angeschweißt oder auf andere Weise befestigt ist, durch die sich die Achse 65 erstreckt. Zwischen der Radachse 65 und einem Teil des Koffers bzw.

Gepäckstückes sind zwei Federn 68 angeordnet, um auf die
Achse 65 eine Kraft auszuüben, so daß diese in eine
Ruhestellung vorgespannt wird.

Die Radachse 65 erstreckt sich mit ihren
gegenüberliegenden Enden durch Führungsschlitze 66, die als
Führungen innerhalb der jeweiligen Radnischen 36 (Fig. 1 bis
3) dienen. Die Führungsschlitze 66 können direkt im Körper
des Gepäckstückes 10 geformt sein, und zwar mit oder ohne
Verstärkung, oder sie können gesondert geformt und dann mit
dem Gepäckstück verbunden werden. Jeder Führungsschlitz 66
enthält, wie am besten aus den Fig. 4 und 5 zu ersehen ist,
einen kurzen vertikalen Abschnitt und daran anschließend
einen Abschnitt, der sich unter einem Winkel nach unten und
zur Rückseite des Gepäckstückes 10 hin erstreckt. Die
Radachse 65 ragt durch diese Führungsschlitze 66 an jeder
Seite des Gepäckstückes 10 und wird so während der Bewegung
der Räder 15 zwischen der Ruhestellung und der ausgefahrenen
Arbeitsstellung durch die Führungsschlitze 66 geführt. Die
Räder 15 sind an den Enden der Achse 65 angebracht.

Die Fig. 4 und 5 veranschaulichen auch den
Mechanismus zum Ausschwenken und Einziehen des Stützfußes
16. Dieser Mechanismus enthält eine Betätigungsstange 70,
welche mit einem Ende am oberen Abschnitt des Stützfußes 16
in einem Gelenkpunkt 75 schwenkbar befestigt ist und einen
Hakenteil 71 am gegenüberliegenden Ende aufweist. Wie
ersichtlich, erstreckt sich der Hakenteil 71 quer zum
Verlauf der Führungsschlitze 66, so daß bei Bewegen der
Achse 65 längs der Führungsschlitze 66 nach unten und hinten
der Hakenteil 71 erfaßt und mitgeführt wird. Zwischen dem
Schwenkpunkt 65 am oberen Rand des Stützfußes 16 und einem
Abschnitt 78 des Gepäckstückes 10 ist eine Feder 76
angeordnet, die derart wirkt, daß sich der Stützfuß 16 in
seine eingezogene Ruhestellung zu bewegen trachtet. Auf
diese Weise verschwenkt die Feder 66, wenn sich die Radachse
65 nach oben längs der Führungsschlitze 66 bewegt, den
Stützfuß 16 in die Ruhestellung.

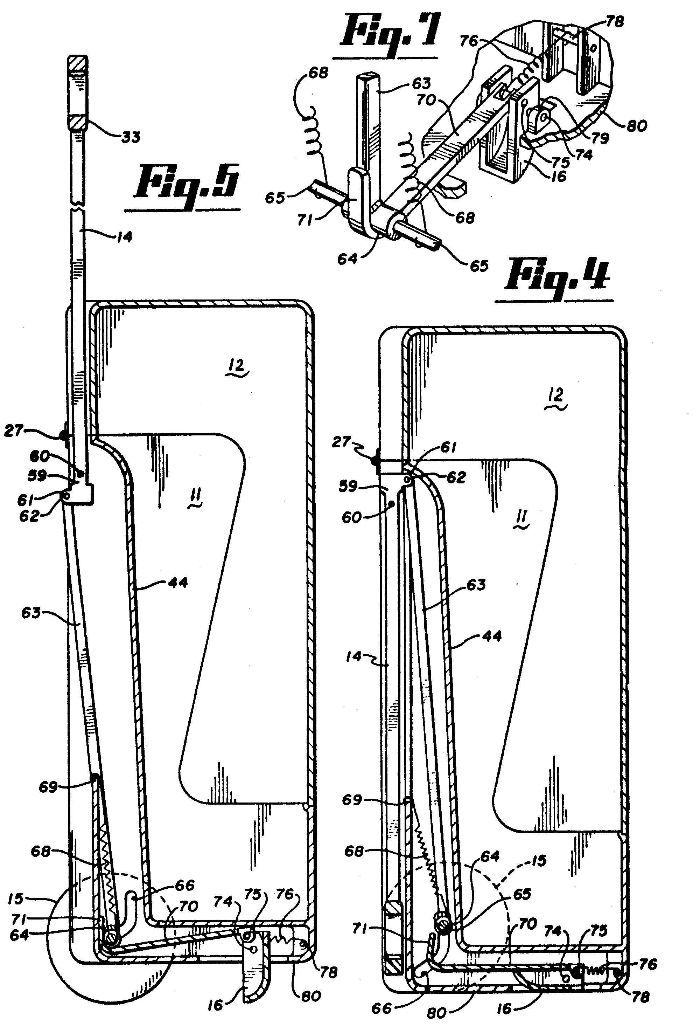

Fig. 7 zeigt schaubildlich den Mechanismus zum Ein-
und Ausschwenken des Stützfußes 16. Wie ersichtlich, ist der
Stützfuß 16 relativ zum Bodenteil 80 des Gepäckstückes um
eine Schwenkachse 74 schwenkbar angebracht. Diese
Schwenkachse 74 wird ihrerseits von zwei hochstehenden
Lageransätzen 79 gelagert. Die Schwenkachse 74 erstreckt
sich durch diese Ansätze 79 und durch einen Teil des
Stützfußes 16, um diesen relativ zum Gepäckstück schwenkbar
zu lagern. Die Feder 76 ist mit ihrem anderen Ende bei 78
mit einem Teil des Gepäckstückes verbunden.

Die Funktionsweise des vorstehend
beschriebenenMechanismus mit dem Handgriff 14, den Rädern 15
und dem Stützfuß 16 kann am besten anhand der Fig. 4 und 5
erklärt werden. In der Ruhestellung ist der Handgriff 14
innerhalb des Kanals oder der Nischen-Ausnehmung 44 an der
Rückseite des Gepäckstückes (Fig. 3) angeordnet. In dieser
Stellung sind die Räder 15 innerhalb der Nischen 35
zurückgezogen, welche Ruhelage in Fig. 4 gezeigt ist. Die
Räder 15 werden dabei in diese eingezogene Ruhelage durch
die Federn 68 vorgespannt. Der Stützfuß 16 befindet sich
ebenfalls in seiner eingeschwenkten Ruhelage, wie in Fig. 4
gezeigt ist. Es sei erwähnt, daß ein federbelasteter Stift
oder ein anderer Klinkenmechanismus den Handgriff 14, wenn
sich dieser in der Ruhelage befindet, in dieser eingeschw
enkten Ruhelage halten kann. In der bevorzugten
Ausführungsform kann der Handgriff 14 einfach durch Ausüben
einer ausreichenden Kraft in die Ruheposition eingeschnappt
werden, jedoch muß ein Freigabeknopf 81 gedrückt werden, um
den Handgriff 14 aus seiner Ruhelage freizugeben. Um die
Räder 15 und den Stützfuß 16 auszufahren, wird der Handgriff
14 nach oben und nach außen im Uhrzeigersinn gemäß der
Darstellung in den Fig. 4 und 5 geschwenkt. Wenn der
Handgriff 14 in dieser Weise geschwenkt wird, bewirkt die
Verdrehung des Verbindungsgliedes 59 um den Schwenkpunkt 60,
daß die Stange 63 die Radachse 65 und damit die Räder 15
abwärts längs des durch die Führungsschlitze 66 definierten

0117866

Weges bewegt. Wenn die Achse 65 jene Stelle erreicht, in der
sie in Eingriff mit dem Hakenteil 71 der Betätigungsstange
70 gelangt, wird diese Stange 70 ebenfalls bewegt, wodurch
der Stützfuß 16 um seine Schwenkachse 74 nach unten
verschwenkt wird. Wenn der Handgriff 14 seine voll
ausgeschwenkte Arbeitslage gemäß Fig. 5 erreicht, nehmen die
Räder 15 und der Stützfuß 16 ihre voll ausgefahrenen
Positionen ein, wie in Fig. 5 gezeigt ist. Wenn sich der
Handgriff 14 in der ausgeschwenkten Stellung befindet, wird
er in dieser Stellung durch einen geeigneten federbelasteten
Stift oder eine federbelastete Klinke gehalten, welche in
herkömmlicher Weise mit dem Handgriff 14 in Eingriff
gelangt, um ihn in seiner ausgeschwenkten Stellung zu
fixieren. Ähnlich dem Klinkenmechanismus, der den Handgriff
14 in der eingefahrenen Stellung hält, ermöglicht es dieser
Klinkenmechanismus, daß der Handgriff einfach durch Ausüben
einer ausreichenden Kraft eingerastet oder eingeschnappt
wird. Es ist jedoch erforderlich, einen federbelasteten
Knopf 82 niederzudrücken, um den Handgriff 14 wieder aus
seiner ausgefahrenen Stellung freizugeben. Um den Handgriff
14, die Räder 15 und den Stützfuß 16 wieder einwärts zu
bewegen, wird der oben beschriebene Vorgang bzw.
Bewegungsablauf umgekehrt.

Patentansprüche:

1.      Gepäckstück (10) mit einem Unterteil (11) und einem
daran angelenkten, relativ dazu zwecks öffnen bzw. Schließen
des Gepäckstückes verschwenkbaren Oberteil (12), welche
Teile (11, 12) zusammen in der Schließlage eine obere Wand
(23), eine Bodenwand, eine Vorderwand (18, 22), eine
Rückwand (21, 26) und zwei Seitenwände (19, 20, 24, 25)
definieren, wobei die Schwenkachse des Oberteiles, die
unterhalb der oberen Wand vorgesehen ist, und die im Bereich
der Vorderwand vorgesehene Teilungslinie (13) zwischen den
beiden Teilen (11, 12) parallel zur Rückwand bzw. Bodenwand
verlaufen, dadurch gekennzeichnet, daß die Teilungslinien
(17) zwischen den beiden Teilen (11, 12) im Bereich der
beiden Seitenwände (19, 20, 24, 25) derart verlaufen, daß
ihre Anschlußstellen an der Vorderwand (18, 22) tiefer
liegen als jene an der Rückwand (21, 26), und daß die beiden
Teile (11, 12) je zumindest ein gesondertes
Aufbewahrungsabteil (z.B. 45, 50) enthalten.

2.      Gepäckstück nach Anspruch 1, dadurch
gekennzeichnet, daß die Teilungslinien (17) im Bereich der
Seitenwände (19, 20, 24, 25) je einen rechtwinkelig zur
Vorderwand (18, 22) und einen rechtwinkelig zur Rückwand
(21, 26) verlaufenden Abschnitt (17a bzw. 17b) sowie einen
diese Abschnitte verbindenden Verbindungsabschnitt (17c)
aufweisen.

3.      Gepäckstück nach Anspruch 2, dadurch
gekennzeichnet, daß jeder der an die Rückwand (21, 26)
anschließenden Abschnitte (17b) sich in Richtung zur
Vorderwand (18, 22) hin bis über die vertikale Mittellinie
der Seitenwand (19, 20, 24, 25) hinaus erstreckt.

4.      Gepäckstück nach Anspruch 3, gekennzeichnet durch
eine Kleiderstange (30), die sich zwischen den
Seitenwandteilen (19, 20) des Unterteiles (11) an einer Stelle ungefähr auf der vertikalen Mittellinie der jeweiligen Seitenwand erstreckt.

5.      Gepäckstück nach Anspruch 3 oder 4, dadurch gekennzeichnet, daß jeder der an die Vorderwand (18, 22) anschließenden Abschnitte (17a) der Teilungslinien (17) im Bereich der Seitenwände (19, 20, 24, 25) sich in Richtung zur Rückwand (21, 26) hin bis über die vertikale Mittellinie der Seitenwand hinaus erstreckt.

6.      Gepäckstück nach einem der Ansprüche 1 bis 5, dadurch gekennzeichnet, daß wenigstens ein Abteil (50) in jenem Bereich der Oberteiles (12) geformt ist, der sich in der Schließlage des Oberteiles oberhalb der Schwenkachse befindet.

7.      Gepäckstück nach Anspruch 6, dadurch gekennzeichnet, daß das im Bereich des Oberteiles (12) oberhalb der Schwenkachse geformte Abteil (50) über eine Tür (55) mit zugehörigem Verschlußmechanismus (58) in einer Außenwand des Gepäckstückes (10) zugänglich ist.

8.      Gepäckstück nach einem der Ansprüche 1 bis 7, dadurch gekennzeichnet, daß wenigstens ein Abteil in jenem Bereich des Oberteiles (12) geformt ist, der sich bei geöffnetem Oberteil in einer Position tiefer als die Schwenkachse befindet.

9.      Gepäckstück nach einem der Ansprüche 1 bis 8, dadurch gekennzeichnet, daß wenigstens ein Abteil im Unterteil (11) geformt ist.

10.      Gepäckstück nach einem der Ansprüche 1 bis 9, dadurch gekennzeichnet, daß das bzw. jedes Abteil (z.B. 45, 50) mit einer anscharnierten Tür (36, 38, 46, 51, 55) mit zugehörigem Verschlußmechanismus (39, 40, 49, 52, 58) versehen ist, um den Zutritt zum Abteil zu ermöglichen.

11.      Gepäckstück nach einem der Ansprüche 1 bis 11, gekennzeichnet durch einen an einer der Wände schwenkbar angebrachten länglichen Handgriff (14), der zwischen einer eingezogenen Ruhestellung und einer ausgefahrenen Arbeitsstellung bewegbar ist und nahe einem Ende einen Griffteil (33) sowie an seinem anderen Ende, auf der Seite der Schwenkachse (60) des Handgriffes (14) gegenüber dem Griffteil (33), ein Bewegungsübertragungs-Verbindungsglied (59) aufweist, und durch eine zwei Räder (15) tragende, parallel zur Schwenkachse (60) des Handgriffes (14) verlaufende, längliche Radachse (65), die mit den Rädern (15) zwischen einereingezogenen Ruhestellung und einer ausgefahrenen Arbeitsstellung bewegbar ist, wobei im Bereich der beide Enden der Radachse (65) jeweils eine Führung (66) für deren Bewegung vorgesehen ist und sich eine Stange (63) zwischen dem Verbindungsglied (59) und der Radachse (65) erstreckt, um die Radachse (65) und Räder (15) bei Bewegen des Handgriffes (14) in die Ruhestellung oder Arbeitsstellung entsprechend in die Ruhestellung bzw. Arbeitsstellung zu bewegen.

13.     Gepäckstück nach Anspruch 12, gekennzeichnet durch eine Ausnehmung (44) zur Aufnahme des Handgriffes (14) in der Ruhestellung.

14.     Gepäckstück nach Anspruch 12, gekennzeichnet durch eine Federeinrichtung (68), die die Radachse (65) in die Ruhestellung vorspannt.

15.     Gepäckstück nach Anspruch 12, dadurch gekennzeichnet, daß ein zwischen einer eingezogenen und einer ausgefahrenen Position bewegbarer Stützfuß (16) schwenkbar am Boden (80) des Gepäckstückes (10) angebracht ist.

16.     Gepäckstück nach Anspruch 15, dadurch gekennzeichnet, daß dem Stützfuß (16) eine Betätigungsstange (70) zugeordnet ist, die mit einem Ende mit dem Stützfuß (16) verbunden ist und deren anderes Ende in einer Position für einen Eingriff mit der Radachse (65) vorliegt.

17.     Gepäckstück nach Anspruch 16, gekennzeichnet durch eine Einrichtung (71, 76) zur Übertragung der Bewegung der Radachse (65) auf die Betätigungsstange (70), um den Stützfuß (16) bei Ausfahren bzw. Einziehen der Radachse (65) entsprechend auszufahren bzw. einzuziehen.

18.      Gepäckstück nach einem der Ansprüche 22 bis 17,
dadurch gekennzeichnet, daß die Führungen (66) durch im
Bereich der gegenüberliegenden Enden der Radachse (65)
angeordnete Führungsschlitze (66) gebildet sind.

19.      Gepäckstück nach Anspruch 18, dadurch
gekennzeichnet, daß die Führungsschlitze (66) derart geformt
sind, daß die Räder (15) zwischen einer eingezogenen
Stellung, in der sie vollständig innerhalb des Umrisses des
Gepäckstückes (10) liegen, und einer ausgefahrenen Stellung,
in der sie teilweise an der Unterseite und Rückseite des
Gepäckstückes (10) vorstehen, bewegbar sind.

**Fig.1**

**Fig.2**

**Fig.3**

**Fig.6**

0117866

2/2

**Fig. 7**

**Fig. 5**

**Fig. 4**